(19) Europäisches Patentamt
European Patent Office
Office européen des brevets

(11) **EP 3 476 561 B1**

(12) **EUROPEAN PATENT SPECIFICATION**

(45) Date of publication and mention
of the grant of the patent:
**26.02.2020 Bulletin 2020/09**

(51) Int Cl.:
**B29C 33/48** *(2006.01)*    **B29D 24/00** *(2006.01)*

(21) Application number: **17382732.0**

(22) Date of filing: **31.10.2017**

(54) **MODULAR MOULD AND METHOD FOR MANUFACTURING A PANEL OF FIBRE REINFORCED MATERIAL**

MODULARE FORM UND VERFAHREN ZUR HERSTELLUNG EINER PLATTE AUS FASERVERSTÄRKTEM MATERIAL

MOULE MODULAIRE ET PROCÉDÉ DE FABRICATION D'UN PANNEAU EN MATÉRIAU RENFORCÉ PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.05.2019 Bulletin 2019/18**

(73) Proprietor: **Airbus Operations, S.L.**
**28906 Getafe Madrid (ES)**

(72) Inventors:
• **VELEZ DE MENDIZABAL ALONSO, Iker**
**28906 Getafe (Madrid) (ES)**

• **MARTINO-GONZALEZ, Esteban**
**28906 Getafe (Madrid) (ES)**
• **APELLANIZ DE LA FUENTE, David**
**28906 Getafe (Madrid) (ES)**

(74) Representative: **Elzaburu S.L.P.**
**Miguel Angel 21, 2nd floor**
**28010 Madrid (ES)**

(56) References cited:
**EP-A2- 2 008 807      WO-A1-03/103933**
**WO-A2-2010/125001      US-A1- 2012 233 861**
**US-A1- 2012 234 468**

**Description**

**Field of the invention**

The present invention is related to a modular mould to produce auxetic behavior or corrugated configurations for panels, using continuous fibres (carbon, aramid, glass, UHMWPE, PBO, Polypropylene...) with the possibility of embedding alternative materials for potential impacts energy absorption (ceramics, elastomers, metals,...).

The main application of such cores configurations would be as lightweight ballistic shields for protecting aircraft systems and airframe from potential hazardous events, such as, Propeller Blade Release (PBR) or Uncontained Engine Rotor Failure (UERF) that would be especially advantageous in highly integrated Open Rotor or Boundary Layer Ingestion rear end engines driven aircraft configurations.

**Background of the invention**

Conventional materials found in nature have positive Poisson ratio, they get thinner when stretched and fatter when compressed, following the Poisson ratio equation:

$$\nu_{yx} = -\frac{\text{transverse strain}}{\text{axial strain}} = -\frac{\varepsilon_x}{\varepsilon_y}$$

Accordingly, Poisson's ratio is defined as the negative of the transverse strain divided by the longitudinal strain.

There are materials or structure geometries configurations that exhibit opposite behavior, that are called auxetic, having a negative Poisson ratio and when stretched, they become thicker perpendicular to the applied force, and thinner when compressed. Therefore, applying a unidirectional tensile force to auxetic material results in an increase in size in the transverse dimension. The behavior of said configuration under impact, which is equivalent to a compression, is that it concentrates material around the impact area due to the negative poisson nature of these configurations.

Most of the cases this is achievable by means of a specific geometry of the internal macro structure of the materials. For instance, by changing the position of vertical elements on a conventional honeycomb geometry, an auxetic material configuration can be obtained.

Honeycomb configurations are usually used as cores in sandwich structures. The purpose of such sandwich structures is to achieve a stiff and simultaneously light component. Sandwich structures consist of two relatively thin, stiff and strong faces separated by a relatively thick lightweight core.

Some of the most relevant advantages are the following:

- With same panel stiffness sandwich structures are lighter than its monolithic counterparts.

- Substantial fabrication time and money savings.

- Great mechanical properties when compression/traction loaded.

- Great specific stiffness and strength.

- Great torsion stiffness.

- Acoustic dampening properties and thermal isolation capabilities.

With honeycomb core sandwich structures all of the named benefits are obtained in a cost effective manner. This concept can be exploited to embed impact resistant cores into a structural element, obtaining considerable weight benefits. Those impact resistant cores can be shaped in a honeycomb pattern in order to achieve structural integrity in the panel. Honeycomb sandwich cores can be produced in a wide variety of materials, ranging from ballistic materials to metals and their derivatives.

Usually corrugated configurations and their derivatives, honeycomb geometries, are not manufactured by moulding. Metal corrugated cores are typically manufactured by bending thin sheets of metal. The use of a mould for manufacturing undulated panels is an enabler for creating alternative geometries cores from continuous fibres carbon laminates and/or ballistic fibres, as the auxetic core geometries. For continuous fibres carbon laminates or ballistic laminates cores, a mould is needed in order to stabilize the sandwich core, before integrating its skins.

Composite armours are typically composed of layers of different materials, such as metals, fabrics and ceramics. Although they are lighter than their equivalent full metallic armours, they still put a significant weight penalty in the structures they are integrated in. This weight penalty is especially critical in aircrafts, where range, speed and/or lift performances can be penalized.

Document WO2010/125001 discloses a modular mould for producing a panel comprising a layer of fibre reinforced material, the layer configured to form hollow cells comprising an undulated trapezoidal cross-section, characterised in that the mould comprises at least three moulding bars for forming each hollow cell, the three moulding bars having a triangular cross shape, and the three moulding bars being configured such that when put together its cross-section forms the shape of the trapezoidal cross- section of the hollow cell.

## Summary of the invention

The aim of this invention is to provide a mould and a method for manufacturing continuous fibres carbon or ballistic laminates auxetic behavior panels, for later use as a lightweight protection against high energy impacts in aircraft airframe and systems.

The mould object of the invention can be manufactured in such a way that allows shock absorbing materials to be embedded in the layup of the lightweight ballistic fabrics. Ceramic materials or any other high compressive strength materials could thus be added to the layup to generate composite armour.

The panel is of the type a fibre reinforced layer forming hollow cells comprising an undulated trapezoidal cross-section.

The mould comprises at least three moulding bars for forming each hollow cell, one moulding bar having a trapezoidal cross shape and two moulding bars having a triangular cross shape, the trapezoidal moulding bar configured to be located in between the two triangular moulding bars and the three moulding bars being configured such that when put together its cross-section forms the shape of the trapezoidal cross- section of the hollow cell.

One of the main advantages of the claimed mould is its modularity, as it can be used for producing both corrugated or hexagonal patterns and it can also produce re-entrant or auxetic geometries without any extra parts. This offers commonality between moulds. This mould can also produce open cells and can produce closed cells, both with the ability of embedding reinforcement or shock absorbing materials where needed. The mould is designed in such a way that the geometries created from the mould can be removed easily without any problems.

For the sake of clarity, a polygon that is not convex, i.e. that is concave, is called also re-entrant. A concave polygon will always have at least one reflex interior angle - that is, an angle with a measure that is between 180 degrees and 360 degrees exclusive.

The mould can be manufactured using ALM 3D printing techniques or any other conventional technique. Using these techniques the modularity of the invention can be exploited for fast prototyping of different configurations. Which could also lead to cost savings in early development stages, or in low production rates parts.

As explained, the mould shall consist of a combination of modules capable of achieving corrugated and re-entrant (auxetic) configurations. Exploiting the modularity, open or closed cells can be manufactured. The mould itself is manufactured in several parts. The interchangeability between these parts provides the mould this characteristic flexibility and modularity for manufacturing different configurations with the same tooling.

The mould needs several moulding parts to appropriately consolidate its modular geometries and to allow a feasible and easy demoulding process. The fundamental units are the trapezoidal shape moulding bar and the two triangular shape moulding bars. The trapezoidal moulding bar has two different base lengths. Depending on the orientation of the trapezoidal moulding bar, a set geometry is created: corrugated if the larger base is over a first face of the panel and reentrant if the larger base is opposite from the first face of the panel. The triangular parts are assembled to the trapezoidal ones. In the case of a corrugated cell shape the trapezoidal and triangular parts can be placed already assembled in the mould, but in the case of re-entrant cells this assembly must be carried out during the moulding process, first mounting the triangular parts in the mould per cell, and then assembling the trapezoidal part. Therefore, the above combination of modules is capable of achieving corrugated and re-entrant (auxetic) configurations and also allows interchangeability between the parts.

It is also an object of the present invention a method for producing a panel of fibre reinforced material as explained above, comprising the following steps:

- providing for a hollow cell open towards a first face of the panel perpendicular to its cross section three moulding bars having its longitudinal axis parallel to said first face of the panel, one moulding bar having a trapezoidal cross shape and two moulding bars having a triangular cross shape, the trapezoidal moulding bar configured to be located in between the two triangular moulding bars, the three moulding bars being configured such that when put together its cross-section forms the shape of the trapezoidal cross- section of the hollow cell,

- adding subsequent groups of triangular and trapezoidal moulding bars for every hollow cell open towards the first face of the panel,

- providing the reinforced layer over the groups of three moulding bars and the area located between two adjacent groups of three moulding bars such that an undulated cross-section is formed,

- providing over the reinforced layer located in the area between two adjacent groups of three moulding bars, another three moulding bars, one moulding bar having a trapezoidal cross shape and two moulding bars having a triangular cross shape, the trapezoidal moulding bar configured to be located in between the two triangular moulding bars, the three moulding bars being configured such that when put together they have the shape of the trapezoidal cross- section of the hollow cell open towards a second face of the panel parallel to the first face,

- curing the reinforced layer, and

- demoulding the moulding bars.

The purpose of the mould is to obtain, by means of Resin Transfer Moulding (RTM) or a vacuum bag process, shielding configurations that can be added to an existing structure or can be part of the structural components of the aircraft. The application of such protection would be especially advantageous in highly integrated rear end engines driven aircraft configurations, such as Open Rotor or Boundary Layer Ingestion architectures, where protection provisions (shields) are required due to safety concerns against Propeller Blade Release (PBR) and Engine Debris (Uncontained Engine Rotor Failure small fragment and third disc) high energy impacts on the fuselage, thus resulting in sizing drivers of the structure. This would result on high weight penalties if conventional state of the art protection solutions were applied.

**Description of the figures**

To complete the description and in order to provide for a better understanding of the invention, a set of drawings is provided. Said drawings form an integral part of the description and illustrate preferred embodiments of the invention. The drawings comprise the following figures.

Figure 1 shows a cross section of a first embodiment of the mould and a corrugated sandwich panel.

Figure 2 shows a cross section of a second embodiment of the mould and a reentrant sandwich panel.

Figure 3 shows a cross section of a third embodiment of the mould and a corrugated sandwich panel having a hexagonal hollow cell.

Figure 4 shows a cross section of a fourth embodiment of the mould and an auxetic sandwich panel having a reentrant hexagonal hollow cell.

Figure 5 shows the method of manufacturing a sandwich panel according to figure 1.

Figure 6 shows the method of manufacturing a sandwich panel according to figure 2.

Figure 7 shows the method of demoulding the mould according to figure 1.

Figure 8 shows the method of demoulding the mould according to figure 2.

Figure 9 shows a first embodiment of a closed cell demoulding configuration.

Figure 10 shows a second embodiment of a closed cell demoulding configuration.

Figure 11 shows the demoulding steps of the embodiment of figure 9.

Figure 12 shows the demoulding steps of the embodiment of figure 10.

Figure 13 shows a sandwich panel with embedded alternative materials for potential high energy impacts absorption.

**Detailed description of the invention**

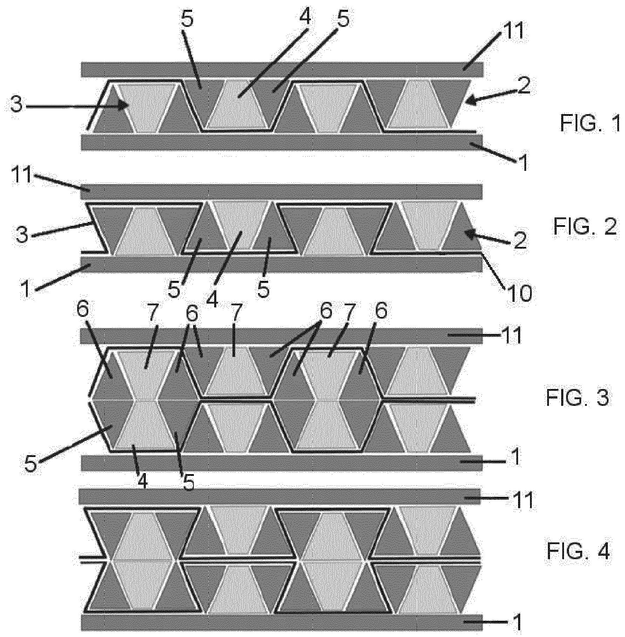

Figure 1 discloses an embodiment of the modular mould and the related panel, corresponding more specifically with a sandwich panel. The sandwich panel comprises two external layers (1, 11) and a core (2) located in between the external layers (1, 11) and made of a fibre reinforced layer (10) forming hollow cells (3) comprising an undulated trapezoidal cross-section. The mould comprises at least three moulding bars (4, 5) for forming each hollow cell (3), one moulding bar (4) has a trapezoidal cross shape and two moulding bars (5) have a triangular cross shape, the trapezoidal moulding bar (4) is located in-between the two triangular bars (5) and the three moulding bars (4, 5) when put together have the shape of the trapezoidal cross- section of the hollow cell (3). The external layers (1, 11) can be made of a homogeneous material, for instance, metallic material.
Figure 2 discloses another embodiment in which the hollow cell (3) comprises a reentrant shape, therefore defining an auxetic sandwich panel.

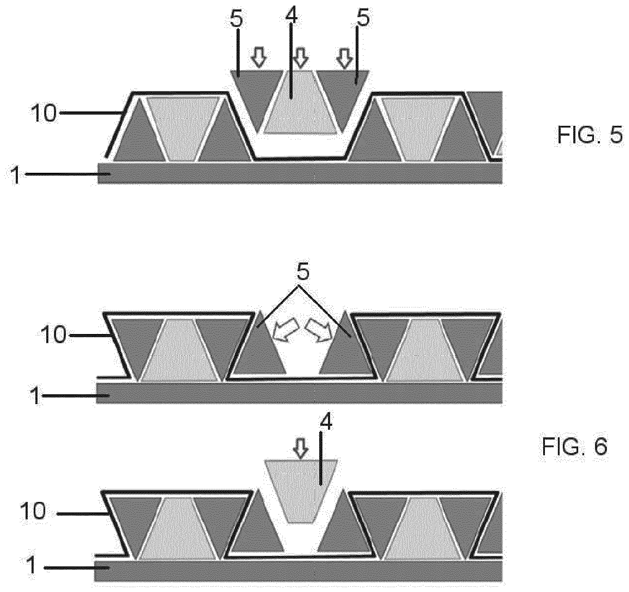

In figure 1, the shape of the hollow cell (3) is obtained by positioning the two triangular bars (5) with its base resting over a first face of the panel, more specifically over the first external layer (1) and the trapezoidal bar (4) located in between, with its shorter base adjacent to the bases of the triangular bars (5) and the first external layer (1). Figure 5 depicts the moulding process for open cells (3).
In figure 2, the reentrant shape is formed by positioning the trapezoidal bar (4) over the first face of the panel, more specifically over the first external layer (1) with its wider base adjacent to the first external layer (1) and afterwards the two triangular bars (5) are located with its base adjacent to the second external layer (11). Figure 6 depicts the moulding process for open cells (3).
Figure 3 and 4 show closed hollow cells (3) formed by stacked rows of triangular (5, 6) and trapezoidal (4, 7) moulding bars with the previously described configuration. The previous design can be expanded to obtain a closed cell (3) configuration from an open cell (3) configuration. The moulding process is similar to the one performed for the open cell (3) configuration. The process is replicable for as many stacked cells (3) as needed.
Specifically the mould comprises additional three moulding bars (6, 7) for each hollow cell (3) such that an hexagonal hollow cell (3) is performed, one moulding bar (7) having a trapezoidal cross shape and two moulding bars (6) having a triangular cross shape, the trapezoidal moulding bar (7) located in between the two triangular bars (6) and the three moulding bars (4, 6) and the additional three moulding bars (6, 7) configured to be located with a symmetry plane parallel to the faces of the panel, more particularly, parallel to the two external layers (1, 11), such that an hexagonal hollow cell (3) is formed, when the six moulding bars (4, 5, 6, 7) are put together.

As previously explained, the moulding bars can defined two different embodiments, an hexagonal hollow cell (3) or a reentrant hollow cell (3) depending on how the trapezoidal moulding bars (4, 7) are located.

According to figures 5 and 6 the method for producing the sandwich panel of the embodiment comprises the following steps:

-    providing the first external layer (1),

-    providing over the first external layer (1), for each hollow cell (3) open towards the first external layer (1), a number of three moulding bars (4, 5), one moulding bar (4) having a trapezoidal cross shape and two moulding bars (5) having a triangular cross shape, the trapezoidal moulding bar (4) configured to be located in between the two triangular moulding bars (5), the three moulding bars (4, 5) being configured such that when put together its cross-section forms the shape of the trapezoidal cross- section of the hollow cell (3)

-    providing the fibres laminates reinforced core layer (10) over the number of moulding bars (4, 5) and the portion of first external layer (1) located between adjacent moulding bars (4, 5),

-    providing over the reinforced core layer (10) located between adjacent moulding bars (4, 5), three moulding bars, one moulding bar (4) having a trapezoidal cross shape and two moulding bars (5) having a triangular cross shape, the trapezoidal moulding bar (4) configured to be located in between the two triangular moulding bars (5), the three moulding bars (4, 5) being configured such that when put together they have the shape of the trapezoidal cross- section of the hollow cell (3) open to the second external layer (11),

-    providing the second external layer (11) over the reinforced core layer (10) and the moulding bars (4, 5),

-    curing, and

-    demoulding the moulding bars (4, 5).

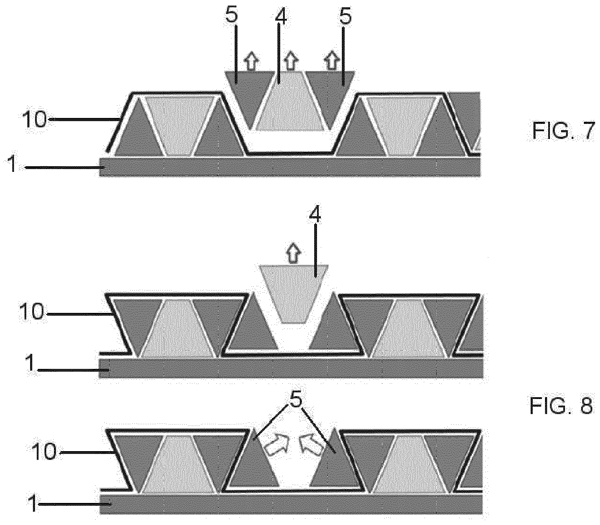

For the demoulding process of the open hollow cells (3), in the case of the re-entrant shapes, as shown in figure 8, the demoulding must be carried out opposite to the moulding. The trapezoidal moulding bar (4) has to be extracted first, as this is the moulding bar that holds both triangular moulding bars (5) in place. Right after the trapezoidal shape (4) has been removed the triangular shapes (5) can be extracted. In the case of corrugated shapes, the trapezoidal (4) and triangular (6) bars can be demoulded at the same time.

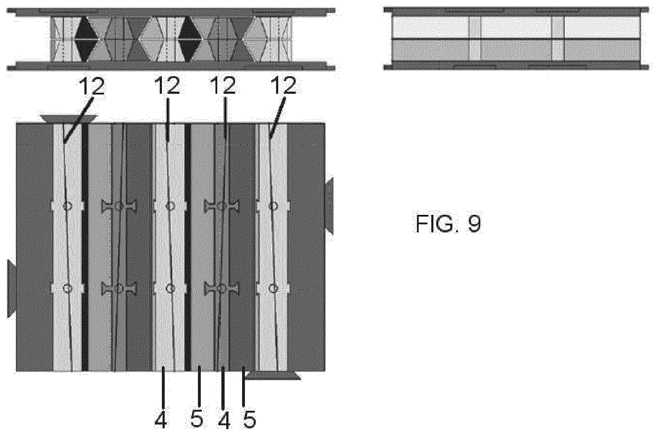

For the closed hollow cells (3) configuration, the demoulding can be only performed in the cells (3) longitudinal direction. In order to do so, two different concepts have been devised: Figure 9 shows a first demoulding embodiment in which the triangular moulding bars (5, 6) are kept unaltered and the trapezoidal cross shape moulding bars (4, 7) are split into two parts by a slope plane (12) perpendicular to the bases of the trapezoidal bars (4, 7) and forming an angle with the longitudinal direction of the moulding bar (4, 7) in order to ease the demoulding in the cell (3) direction.

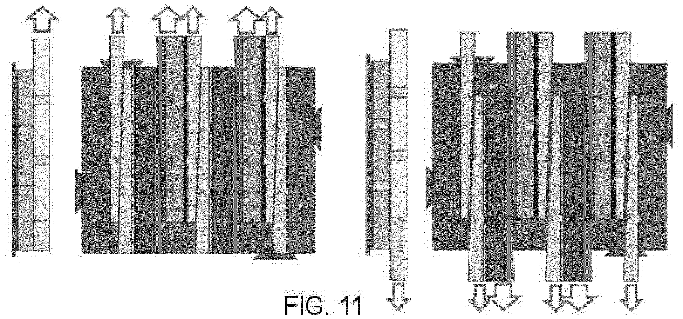

The demoulding sequences differ from the one performed in the open cell (3) configuration. The out of plane direction of extraction is not an option. Consequently, moulding bars (4, 5, 6, 7) have to be extracted from the open lateral sides, as it can be seen in figures 11.

More specifically, each triangular part (5, 6) is joined to a split of the trapezoidal part (4, 7), those parts forming a unit. These units are extracted in their predefined demoulding directions by means of the vertical sloped splitting plane (12) perpendicular to the bases of the trapezoidal moulding bar (4, 7) and forming an angle with the longitudinal direction of the trapezoidal moulding bar (4, 7). Ones in a first step in one of the longitudinal directions of the cells (3), and the remaining ones in a second step in the opposite longitudinal direction of the cells (3). This is shown schematically in figures 11.

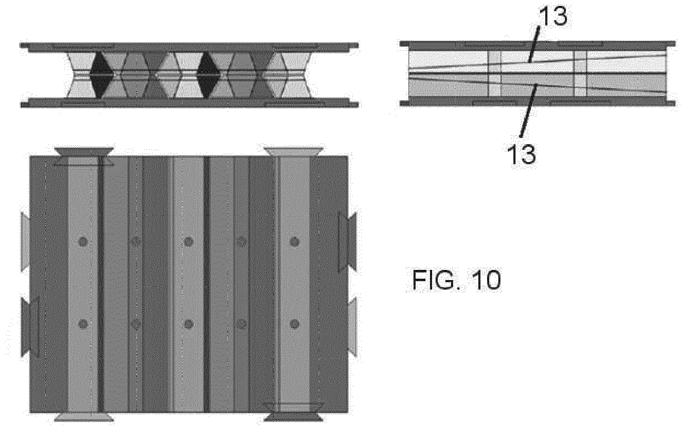

Figure 10 shows a second embodiment for the demoulding process in which both the trapezoidal cross shape moulding bars (4, 7) and the triangular moulding bars (5, 6) are split into two parts by a slope plane (13) perpendicular to a plane perpendicular to the bases of the trapezoidal and triangular bars (4, 5, 6, 7) in the longitudinal direction and that forms an angle with the longitudinal direction of the moulding bars (4, 5, 6, 7). The sloped plane (13) is placed horizontal instead of vertical, and in order to ease the demoulding it must cut all the adjacent parts per cell, trapezoidal and triangular (4, 5, 6, 7), thus achieving less commonality than the first embodiment. In this case the moulding bars (4, 5, 6, 7) can be joined in groups of three by means of a joint so that more parts can be demoulded at the same time.

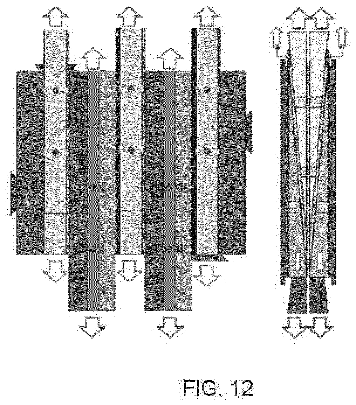

The demoulding process is similar to the first embodiment. The parts must also be demoulded in their predefined by means of the horizontal sloped splitting plane (13) demoulding directions. This process is detailed in figure 12. In a first step the inner cells (3) parts are extracted in alternative longitudinal directions of the cells (3), and in a second step the remaining ones are extracted in the opposite alternative longitudinal direction of the cells (3).

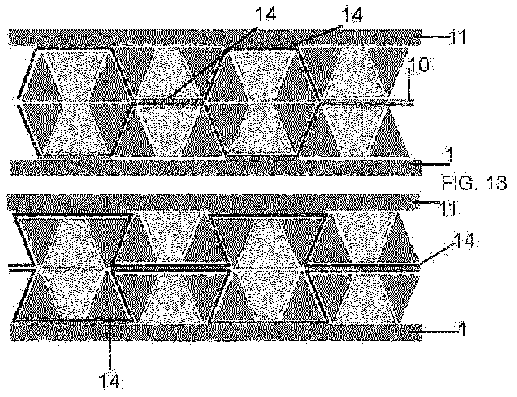

The mould and the process also give the opportunity to embed different types of materials as can be seen in figure 13, in which a sheet of material (14) is located between the external layers (1, 11) and the core layer (10) at the head of the hollow cells (3) and a sheet of material (14) is also provided between two fibre reinforced layers (10) of adjacent cells (3) or even between the moulding bars (4,5) and the reinforced layer (10). This opportunity is especially interesting for high energy prone impact cells faces. Those materials range from high compressive strength materials to shock absorption polymers. Some examples of these embeddable materials could be: ceramics, elastomers, metals.

## Claims

1.  Modular mould for producing a panel comprising a layer (10) of fibre reinforced material, the layer (10) configured to form hollow cells (3) comprising an undulated trapezoidal cross-section, **characterised in that** the mould comprises at least three moulding bars for forming each hollow cell (3), one moulding bar (4) having a trapezoidal cross shape and two moulding bars (5) having a triangular cross shape, the trapezoidal moulding bar (4) configured to be located in between the two triangular moulding bars (5) and the three moulding bars (4, 5) being configured such that when put together its cross-section forms the shape of the trapezoidal cross- section of the hollow cell (3).

2.  Modular mould, according to claim 1, wherein it comprises additional three moulding bars (6, 7) for each hollow cell (3) such that an hexagonal hollow cell (3) is performed, one moulding bar (7) having a trapezoidal cross shape and two moulding bars (6) having a triangular cross shape, the trapezoidal moulding bar (7) configured to be located in between the two triangular moulding bars (6) and the six moulding bars (4, 5, 6, 7) configured to form the hexagonal hollow cell (3) when they are put together.

3.  Modular mould, according to claim 2, wherein the hexagonal hollow cell (3) is a reentrant auxetic hexagonal hollow cell (3).

4.  Modular mould, according to claim 2 or 3, wherein the trapezoidal cross shape moulding bars (4, 7) are split into two parts by a slope plane (12) perpendicular to the bases of the trapezoidal moulding bar (4, 7) and forming an angle with the longitudinal direction of the trapezoidal moulding bar (4, 7).

5.  Modular mould, according to claim 2 or 3, wherein the trapezoidal cross shape moulding bars (4, 7) and the triangular moulding bars (5, 6) are split into two parts by a slope plane (13) forming an angle with the longitudinal direction of the moulding bars (4, 5, 6, 7).

6.  Method for manufacturing a panel comprising a layer (10) of fibre reinforced material, the layer (10) configured to form hollow cells (3) comprising an undulated trapezoidal cross-section, the method comprising the following steps:

    - providing for a hollow cell (3) open towards a first face of the panel perpendicular to its cross section three moulding bars (4, 5) having its longitudinal axis parallel to said first face of the panel, one moulding bar (4) having a trapezoidal cross shape and two moulding bars (5) having a triangular cross shape, the trapezoidal moulding bar (4) configured to be located in between the two triangular moulding bars (5), the three moulding bars (4, 5) being configured such that when put together its cross-section forms the shape of the trapezoidal cross- section of the hollow cell (3),
    - adding subsequent groups of triangular and trapezoidal moulding bars (4, 5) for every hollow cell (3) open towards the first face of the panel,
    - providing the reinforced layer (10) over the groups of three moulding bars (4, 5) and the area located between two adjacent groups of three moulding bars (4, 5) such that an undulated cross-section is formed,
    - providing over the reinforced layer (10) located in the area between two adjacent groups of three moulding bars (4, 5), another three moulding bars, one moulding bar (4) having a trapezoidal cross shape and two moulding bars (5) having a triangular cross shape, the trapezoidal moulding bar (4) configured to be located in between the two triangular moulding bars (5), the three moulding bars (4, 5) being configured such that when put together they have the shape of the trapezoidal cross- section of the hollow cell (3) open towards a second face of the panel parallel to the first face,
    - curing the reinforced layer (10), and
    - demoulding the moulding bars (4, 5).

7.  Modular method, according to claim 6, wherein when providing the three moulding bars (4, 5) open towards the first face of the panel, the two triangular bars (5) are firstly positioned and afterwards the trapezoidal bar (4) is provided in-between with its shorter base adjacent to the first face of the panel.

8.  Modular method, according to claim 6, wherein when providing the three modular bars (4, 5) over the first face of the panel, the trapezoidal bar (4) is firstly provided with its wider base adjacent to the first face of the panel and afterwards the two triangular bars (5) are provided with their base adjacent to the second face of the panel.

9. Modular method, according to any preceding claim 6 to 8, wherein it comprises the step of providing a sheet of material (14) over the reinforced layer (10) on top of the undulated cells (3).

10. Modular method, according to any preceding claim 6 to 9, wherein it comprises the step of providing a sheet of material (14) between two fibre reinforced layers (10) of adjacent cells (3).

11. Modular method, according to any preceding claim 6 to 10, wherein it comprises the step of providing a sheet of material (14) between the moulding bars (4,5) and the reinforced layer (10).

12. Modular method, according to any preceding claim 6 to 11, wherein it comprises the step of providing a first external layer (1) over the first face of the panel.

13. Modular method, according to claim 12, wherein it comprises the step of providing a second external layer (11) over the second face of the panel such that a sandwich panel having two external layers (1, 11) and a core reinforced layer (10) is formed.


**Patentansprüche**

1. Modulares Formwerkzeug zur Herstellung einer Platte, die eine Schicht (10) aus faserverstärktem Material umfasst, wobei die Schicht (10) dafür gestaltet ist, hohle Zellen (3) zu bilden, die einen welligen trapezförmigen Querschnitt aufweisen, **dadurch gekennzeichnet, dass** das Formwerkzeug wenigstens drei Formstangen zum Formen jeder hohlen Zelle (3) umfasst, wobei ein Formstange (4) eine trapezförmige Querschnittsform aufweist und zwei Formstangen (5) eine dreieckige Querschnittsform aufweisen, wobei die trapezförmige Formstange (4) zur Anordnung zwischen den beiden dreieckigen Formstangen (5) gestaltet ist und die drei Formstangen (4, 5) so gestaltet sind, dass, wenn zusammengesetzt, ihr Querschnitt die Form des trapezförmigen Querschnitts der hohlen Zelle (3) bildet.

2. Modulares Formwerkzeug gemäß Anspruch 1, umfassend zusätzliche drei Formstangen (6, 7) für jede hohle Zelle (3), so dass eine hexagonale hohle Zelle (3) gebildet wird, wobei ein Formstange (7) eine trapezförmige Querschnittsform aufweist und zwei Formstangen (6) eine dreieckige Querschnittsform aufweisen, wobei die trapezförmige Formstange (7) zur Anordnung zwischen den beiden dreieckigen Formstangen (6) gestaltet ist und die sechs Formstangen (4, 5, 6, 7) so gestaltet sind, dass, wenn sie zusammengesetzt sind, die hexagonale hohle Zelle (3) bilden.

3. Modulares Formwerkzeug gemäß Anspruch 2, wobei die hexagonale hohle Zelle (3) eine rückspringende auxetische hexagonale hohle Zelle (3) ist.

4. Modulares Formwerkzeug gemäß Anspruch 2 oder 3, wobei die Formstangen mit trapezförmigem Querschnitt (4, 7) von einer geneigten Ebene (12), die senkrecht auf die Basen der trapezförmigen Formstange (4, 7) steht und einen Winkel mit der Längsrichtung der trapezförmigen Formstangen (4, 7) bildet, in zwei Teile geteilt werden.

5. Modulares Formwerkzeug gemäß Anspruch 2 oder 3, wobei die Formstangen mit trapezförmigem Querschnitt (4, 7) und die dreieckigen Formstangen (5, 6) von einer geneigten Ebene (13), die einen Winkel mit der Längsrichtung der Formstangen (4, 5, 6, 7) bildet, in zwei Teile geteilt werden.

6. Verfahren zur Herstellung einer Platte, die eine Schicht (10) aus faserverstärktem Material umfasst, wobei die Schicht (10) dafür gestaltet ist, hohle Zellen (3) zu bilden, die einen welligen trapezförmigen Querschnitt aufweisen, wobei das Verfahren folgende Schritte umfasst:

    - für eine hohle Zelle (3), die zu einer ersten Seite der Platte senkrecht zu ihrem Querschnitt offen ist, Bereitstellen von drei Formstangen (4, 5) mit ihren Längsachsen parallel zu der ersten Seite der Platte, wobei ein Formstange (4) eine trapezförmige Querschnittsform aufweist und zwei Formstangen (5) eine dreieckige Querschnittsform aufweisen, wobei die trapezförmige Formstange (4) zur Anordnung zwischen den beiden dreieckigen Formstangen (5) gestaltet ist und die drei Formstangen (4, 5) so gestaltet sind, dass, wenn zusammengesetzt, ihr Querschnitt die Form des trapezförmigen Querschnitts der hohlen Zelle (3) bildet,
    - Hinzufügen weiterer Gruppen von dreieckigen und trapezförmigen Formstangen (4, 5) für jede hohle Zelle (3), die zu der ersten Seite der Platte offen ist,
    - Bereitstellen der Verstärkungsschicht (10) über den Gruppen von drei Formstangen (4, 5) und dem Bereich, der zwischen zwei benachbarten Gruppen von drei Formstangen (4, 5) angeordnet ist, so dass ein welliger Querschnitt gebildet wird,
    - über der Verstärkungsschicht (10) Bereitstellen weiterer drei Formstangen in dem Bereich zwischen zwei benachbarten Gruppen von drei Formstangen (4, 5), wobei ein Formstange (4) eine trapezförmige Querschnittsform aufweist und zwei Formstangen (5) eine dreieckige Querschnittsform aufweisen, wobei die trapezförmige Formstange (4) zur Anordnung zwischen den beiden dreieckigen Formstangen (5) gestaltet ist und die drei Formstangen (4, 5) so gestaltet sind, dass sie, wenn zusammengesetzt, die Form des trapezförmigen Querschnitts der hohlen Zelle (3) aufweisen, die zu einer zweiten Seite der Platte, die zu der ersten Seite parallel ist, offen ist,
- Härten der Verstärkungsschicht (10) und
- Herausnehmen der Formstangen (4, 5).

7. Modulares Verfahren gemäß Anspruch 6, wobei bei der Bereitstellung der drei Formstangen (4, 5), die sich zu der ersten Seite der Platte öffnen, zuerst die beiden dreieckigen Stangen (5) angeordnet werden und anschließend die trapezförmige Stange (4) dazwischen angeordnet wird, wobei seine kürzere Basis zu der ersten Seite der Platte benachbart ist.

8. Modulares Verfahren gemäß Anspruch 6, wobei bei der Bereitstellung der drei modularen Stangen (4, 5) über der ersten Seite der Platte zuerst die trapezförmige Stange (4) mit ihrer breiteren Seite benachbart zu der ersten Seite der Platte angeordnet wird und anschließend die beiden dreieckigen Stangen (5) mit ihrer Basis benachbart zu der zweiten Seite der Platte angeordnet werden.

9. Modulares Verfahren gemäß einem der vorstehenden Ansprüche 6 bis 8, umfassend den Schritt des Bereitstellens einer Materiallage (14) über der verstärkten Schicht (10) auf den welligen Zellen (3).

10. Modulares Verfahren gemäß einem der vorstehenden Ansprüche 6 bis 9, umfassend den Schritt des Bereitstellens einer Materiallage (14) zwischen zwei faserverstärkten Schichten (10) von benachbarten Zellen (3).

11. Modulares Verfahren gemäß einem der vorstehenden Ansprüche 6 bis 10, umfassend den Schritt des Bereitstellens einer Materiallage (14) zwischen den Formstangen (4, 5) und der verstärkten Schicht (10).

12. Modulares Verfahren gemäß einem der vorstehenden Ansprüche 6 bis 11, umfassend den Schritt des Bereitstellens einer ersten Außenschicht (1) über der ersten Seite der Platte.

13. Modulares Verfahren gemäß Anspruch 12, umfassend den Schritt des Bereitstellens einer zweiten Außenschicht (11) über der zweiten Seite der Platte, so dass eine Sandwichplatte mit zwei Außenschichten (1, 11) und einer verstärkten Kernschicht (10) gebildet wird.

**Revendications**

1. Moule modulaire destiné à produire un panneau comprenant une couche (10) de matériau renforcé de fibres, la couche (10) étant configurée pour former des cellules creuses (3) présentant une section transversale trapézoïdale ondulée, **caractérisé en ce que** le moule comprend au moins trois barres de moulage destinées à former chaque cellule creuse (3), une barre de moulage (4) ayant une forme transversale trapézoïdale et deux barres de moulage (5) ayant une forme transversale triangulaire, la barre de moulage trapézoïdale (4) étant configurée pour être positionnée entre les deux barres de moulage triangulaires (5) et les trois barres de moulage (4, 5) étant configurées de telle sorte que, assemblées, leur section transversale crée la forme de la section transversale trapézoïdale de la cellule creuse (3).

2. Moule modulaire selon la revendication 1, qui comprend trois barres de moulage supplémentaires (6, 7) pour chaque cellule creuse (3), de telle sorte qu'une cellule creuse hexagonale (3) est créée, une barre de moulage (7) ayant une forme transversale trapézoïdale et deux barres de moulage (6) ayant une forme transversale triangulaire, la barre de moulage trapézoïdale (7) étant configurée pour être positionnée entre les deux barres de moulage triangulaires (6) et les six barres de moulage (4, 5, 6, 7) étant configurées pour former la cellule creuse hexagonale (3) lorsqu'elles sont assemblées.

3. Moule modulaire selon la revendication 2, dans lequel la cellule creuse hexagonale (3) est une cellule creuse hexagonale auxétique réentrante (3).

4. Moule modulaire selon la revendication 2 ou 3, dans lequel les barres de moulage de forme transversale trapézoïdale (4, 7) sont scindées en deux parties par un plan d'inclinaison (12) perpendiculaire aux bases des barres de moulage trapézoïdales (4, 7) et formant un angle avec la direction longitudinale des barres de moulage trapézoïdales (4, 7).

5. Moule modulaire selon la revendication 2 ou 3, dans lequel les barres de moulage de forme transversale trapézoïdale (4, 7) et les barres de moulage triangulaires (5, 6) sont scindées en deux parties par un plan d'inclinaison (13) formant un angle avec la direction longitudinale des barres de moulage (4, 5, 6, 7).

6. Procédé de fabrication d'un panneau comprenant une couche (10) de matériau renforcé de fibres, la couche (10) étant configurée pour former des cellules creuses (3) présentant une section transversale trapézoïdale ondulée, le procédé comprenant les étapes suivantes :

- disposer, pour une cellule creuse (3) ouverte vers une première face du panneau perpendiculaire à sa section transversale, trois barres de moulage (4, 5) ayant leur axe longitudinal parallèle à ladite première face du panneau, une barre de moulage (4) ayant une forme transversale trapézoïdale et deux barres de moulage (5) ayant une forme transversale triangulaire, la barre de moulage trapézoïdale (4) étant configurée pour être positionnée entre les deux barres de moulage triangulaires (5), les trois barres de moulage (4, 5) étant configurées de telle sorte que, assemblées, leur section transversale crée la forme de la section transversale trapézoïdale de la cellule creuse (3),
- ajouter des groupes consécutifs de barres de moulage triangulaires et trapézoïdales (4, 5) pour chaque cellule creuse (3) ouverte vers la première face du panneau,
- disposer la couche renforcée (10) sur les groupes de trois barres de moulage (4, 5) et la zone située entre deux groupes adjacents de trois barres de moulage (4, 5) de telle sorte qu'une section transversale ondulée soit formée,
- disposer, sur la couche renforcée (10) située dans la zone entre deux groupes adjacents de trois barres de moulage (4, 5), trois autres barres de moulage, une barre de moulage (4) ayant une forme transversale trapézoïdale et deux barres de moulage (5) ayant une forme transversale triangulaire, la barre de moulage trapézoïdale (4) étant configurée pour être positionnée entre les deux barres de moulage triangulaires (5), les trois barres de moulage (4, 5) étant configurées de telle sorte que, assemblées, elles ont la forme de la section transversale trapézoïdale de la cellule creuse (3) ouverte vers une deuxième face du panneau parallèle à la première face,
- durcir la couche renforcée (10), et
- démouler les barres de moulage (4, 5).

7. Procédé modulaire selon la revendication 6 dans lequel, lorsqu'on dispose les trois barres de moulage (4, 5) ouvertes vers la première face du panneau, on dispose d'abord les deux barres triangulaires (5), et ensuite, on dispose la barre trapézoïdale (4) entre elles avec sa base la plus courte adjacente à la première face du panneau.

8. Procédé modulaire selon la revendication 6 dans lequel, lorsqu'on dispose les trois barres de moulage (4, 5) sur la première face du panneau, on dispose d'abord la barre trapézoïdale (4) avec sa base la plus large adjacente à la première face du panneau, et ensuite, on dispose les deux barres triangulaires (5) avec leur base adjacente à la deuxième face du panneau.

9. Procédé modulaire selon l'une quelconque des revendications 6 à 8 précédentes, qui comprend l'étape consistant à disposer une feuille de matériau (14) sur la couche renforcée (10) au-dessus des cellules ondulées (3) .

10. Procédé modulaire selon l'une quelconque des revendications 6 à 9 précédentes, qui comprend l'étape consistant à disposer une feuille de matériau (14) entre deux couches renforcées de fibres (10) de cellules adjacentes (3).

11. Procédé modulaire selon l'une quelconque des revendications 6 à 10 précédentes, qui comprend l'étape consistant à disposer une feuille de matériau (14) entre les barres de moulage (4, 5) et la couche renforcée (10).

12. Procédé modulaire selon l'une quelconque des revendications 6 à 11 précédentes, qui comprend l'étape consistant à disposer une première couche externe (1) sur la première face du panneau.

13. Procédé modulaire selon la revendication 12, qui comprend l'étape consistant à disposer une deuxième couche externe (11) sur la deuxième face du panneau de telle sorte qu'un panneau sandwich ayant deux couches externes (1, 11) et une couche centrale renforcée (10) soit formé.

FIG. 1

FIG. 2

FIG. 3

FIG. 4

FIG. 5

FIG. 6

5    4    5

10

1

FIG. 7

4

10

1

5

10

1

FIG. 8

FIG. 9

FIG. 10

FIG. 11

FIG. 12

14    14

11

10

1

FIG. 13

11

14

1

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010125001 A